Europäisches Patentamt

European Patent Office

Office européen des brevets

(19)

(11) Numéro de publication: **0 273 065**
**B1**

# FASCICULE DE BREVET EUROPEEN

(12)

(45) Date de publication du fascicule du brevet:
04.10.89

(21) Numéro de dépôt: 86118085.9

(22) Date de dépôt: 27.12.86

(51) Int. Cl.⁴: **A21C 5/02**, B65B 3/32

(54) **Machine pour doser automatiquement des portions de pâte à pain.**

(43) Date de publication de la demande:
06.07.88 Bulletin 88/27

(45) Mention de la délivrance du brevet:
04.10.89 Bulletin 89/40

(84) Etats contractants désignés:
**AT BE CH DE GB IT LI**

(56) Documents cités:
**FR-A- 2 383 607**
**FR-A- 2 584 894**
**US-A- 3 218 994**
**US-A- 4 170 253**

(73) Titulaire: **Tastet, Claude, Ilot des Bordes,**
**F-64940 Moumour(FR)**

(72) Inventeur: **Tastet, Claude, Ilot des Bordes,**
**F-64940 Moumour(FR)**

(74) Mandataire: **Schlawick, Yvan, 8, rue Théophile Gautier,**
**F-65000 Tarbes(FR)**

ACTORUM AG

## Description

La machine objet de l'invention concerne un doseur volumétrique automatique de pâtons de pâte à pain ou de tout autre pâte non alimentaire mais de viscosité identique.

Des machines existent permettant de fractionner des volumes de pâte en portions égales. On connaît notamment une machine travaillant par compression hydraulique formant un gros parallélèpipède, lequel est ensuite découpé en portions avec des couteaux.

Un autre principe connu consiste dans le remplissage d'une chambre avec de la pâte, par aspiration, laquelle chambre a un volume pré-déterminé.

L'inconvénient de ces machines tient dans l'importance et la complexité mécanique et dans les pressions nécessaires à la bonne marche du système. Inconvénients également dans les deux cas dans l'inconfort à l'utilisation et dans le nettoyage quotidiennement indispensable.

Dans la mesure où le rapport de recherche de la demande initiale française peut être pris en considération, il est résumé ci-après.

US-A-1762159(S.CHASE) :

Comporte un entonnoir communiquant avec un tube pour créer une dose de matière par extrusion.

GB-A-2050237(Koppens Machine Fabrick B.U) :

Comporte un corps horizontal surmonté d'un entonnoir, dans lequel corps sont délimitées mécaniquement des doses de produit.

DE-C-528483(P.BLUM) :

Comporte un corps horizontal surmonté d'un entonnoir avec pour but, la délimitation mécanique d'un volume et l'extrusion d'une quantité de produit.

FR-A-2455259(S.MARCEAU) :

Comporte trois pistons, dont deux pistons doseurs et un piston qui actionne une chemise cylindrique qui libère le produit.

GB-A-817022(Kooperativa Forbunaet Ekonomisk Forening) et FR-A-2383607(R.LAURENT) :

Mêmes remarques que pour les brevets précédents.

La machine objet de la présente permet d'éliminer ces inconvénients et d'atteindre par sa simplicité mécanique à une plus grande fiabilité, à un encombrement plus réduit et à un moindre coût.

La machine objet de l'invention comporte un corps cylindrique et creux positionné sur une table et surmonté d'un réservoir vertical sur son extrémité avant.

Le corps horizontal de la machine renferme à l'arrière un ensemble mobile fonctionnant comme un vérin pneumatique à simple effet et dont l'arbre supporte en son extrémité intérieure un piston éjecteur qui se caractèrise par le fait que l'éjection du pâton hors de la machine est faite sous pression d'air, obviant ainsi à la nécessité de jeter de la farine pour empêcher le collage de la pâte. La partie extérieure de l'arbre arrière est entourée d'un ressort à boudin retenu par une butée d'arrêt qui permet le retour au point départ pour un nouveau cycle. A la butée arrière est accrochée, et passant sous la machine dans le corps de la table de support, une tringlerie supportant à l'avant du corps cylindrique un ensemble animé à la fois par le mouvement d'aller et retour du piston arrière et par un mouvement relatif qui lui est propre également d'aller et retour, lequel ensemble avant est construit autour d'un vérin pneumatique à simple effet et qui sert à déterminer le volume de pâton et le déclenchement de son éjection hors de la machine.

Le pâton est constitué dans une chambre limitée par la paroi intérieure du corps cylindrique et par un piston doseur et éjecteur. Les différents éléments mobiles comportent des joints toriques pour une bonne étanchéité, laquelle est préservée partout où nécessaire.

Des dessins annexés à la présente illustrent à titre d'exemple non limitatif un mode de réalisation de la machine, conjointement avec la description ci-après.

La figure 1 représente une coupe longitudinale de la machine, en élévation, avec les éléments mobiles en position de départ (phase d'admission de la pâte).

La figure 2 représente, à une autre échelle, une coupe longitudinale d'un piston éjecteur et son moyen de fixation à l'arbre de la machine.

La figure 3 représente une coupe longitudinale d'un piston doseur positionné à l'avant de la machine.

La figure 4 représente en élévation, à une autre échelle, un vérin et partiellement une tringlerie pour manoeuvrer le piston doseur illustré en figure précédente.

La figure 5 représente, à une autre échelle, une coupe verticale d'un intercalaire pour réservoir supérieur.

La figure 6 représente, à une autre échelle, une coupe verticale d'un réservoir supérieur d'alimentation, à moitié plein.

La figure 7 représente partiellement une coupe verticale de la partie avant de la machine (phase d'éjection).

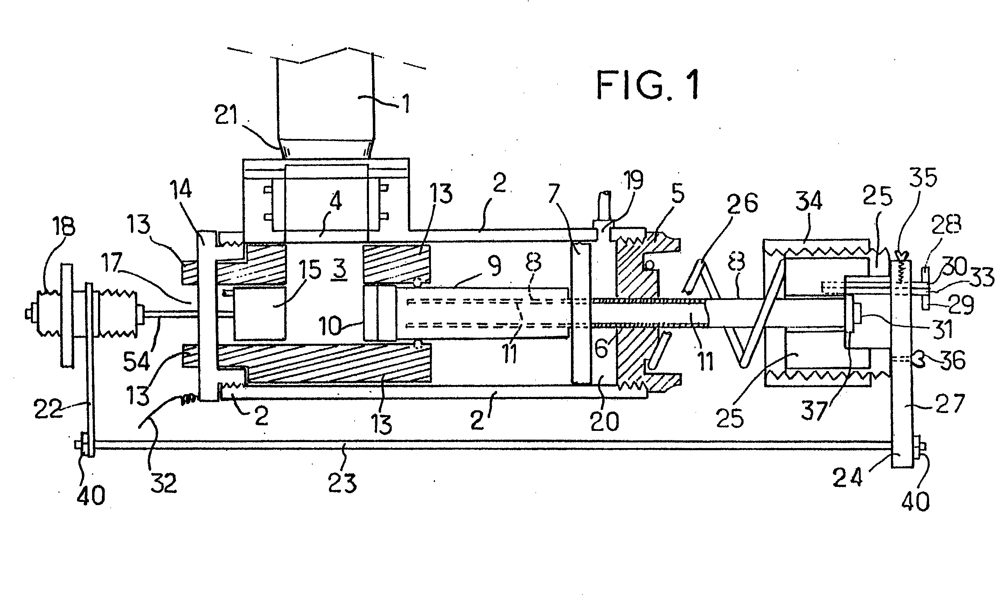

Tel que représenté par l'ensemble des figures, un réservoir 1 circulaire se terminant en cône, est fixé par son plus petit diamètre sur un corps 2 horizontal et cylindrique de la machine posée elle-même sur une table de support, lequel réservoir 1 communique avec une chambre 3 par une ouverture 4 largement prévue dans le corps 2, lequel corps 2 a son extrémité arrière fermée par une pièce circulaire 5 possédant un épaulement et comportant un trou central 6 pour le passage d'un arbre 8 creux qui porte plus avant dans le corps 2 un piston 7 étroit et plus avant encore un piston éjecteur 9 longitudinal, lequel piston éjecteur 9 se caractérise en ce qu'il prolonge un creux central 11 de l'arbre 8 et par le fait qu'il se termine par une toile 10 permettant le passage de l'air sous pression arrivant par le creux central 11, laquelle toile 10 s'appuie sur une grille rigide 12 laissant elle-même passer l'air sous pression. Le piston éjecteur 9 en position de départ de cycle (figure 1) se trouve à la limite du réservoir 1 dans une chemise 13 circulaire qui forme une chambre 3, laquelle chemise 13 possède une ouverture supérieure correspondant à l'ouverture 4 du corps 2 et ladite chemise 13 est retenue à l'avant du corps 2 au moyen d'une bague 14 qui se visse sur la paroi intérieure de ce dernier par un épaulement.

Le piston 9 en position de départ laisse le libre passage à la pâte qui peut ainsi remplir la chambre 3, laquelle pâte par son propre poids pousse un piston 15 qui délimite en position de départ la chambre 3 vers l'avant. L'enfoncement du piston 15, poussé par la pâte, sur son axe 54, déclenche par le truchement d'une vanne 16 de pilotage pneumatique située dans le piston 15, la fin du remplissage de la chambre 3. Ainsi, la vanne 16 déclenche l'arrivée d'air comprimé par un orifice 19, lequel orifice 19 situé à l'arrière du corps 2 permet l'introduction de l'air dans une chambre 20 formée par la pièce circulaire 5 et le piston 7, lequel piston 7 glisse vers l'avant sur la paroi intérieure du corps 2 entraînant tous les éléments faisant corps ou positionnés sur l'arbre 8. Ainsi le piston 7 pousse le piston 9 qui détache en avançant une part de la pâte supérieure et pousse le pâton ainsi formé dans un couloir 17 constitué par la chemise 13; en effet, le couloir 17 se trouve dégagé par les deux mouvements simultanés qui additionnent leur vitesse, du piston 15 reculant emporté par le recul de l'axe 54 de son vérin 18, lequel vérin 18 suit le mouvement de son support 22 animé dans son mouvement de recul par une tringlerie 23. Ladite tringlerie 23 est accrochée à l'extrémité inférieure 24 d'une plaque 27 qui est fixée sur une butée d'arrêt 25 d'un ressort à boudin 26, laquelle butée d'arrêt 25 est entraînée par l'arbre 8 vers l'avant de la machine.

La course du piston 7 peut être limitée par un fourreau 34 arrière qui se visse par l'intérieur sur la périphérie de la butée d'arrêt 25, lequel fourreau 34 bute sur la pièce circulaire 5 empêchant l'arbre 8 de poursuivre vers l'avant.

La plaque 27 porte deux tiges butées 28 et 29, laquelle tige 28 porte un ergot 30 destiné à déclencher une vanne de pilotage qui commande le passage de l'air sous pression dans le creux 11 de l'arbre 8, et laquelle autre tige de butée 29 déclenche avec son ergot 33 une autre vanne de pilotage qui commande le vérin pneumatique 18 placé devant le corps 2, dans son mouvement propre de recul ou d'avancement de son axe. Les tiges butées 28 et 29 sont réglables et fixées en position par des vis à oreilles 35, et la plaque 27 est fixée à la butée d'arrêt 25 par des vis à oreilles 36.

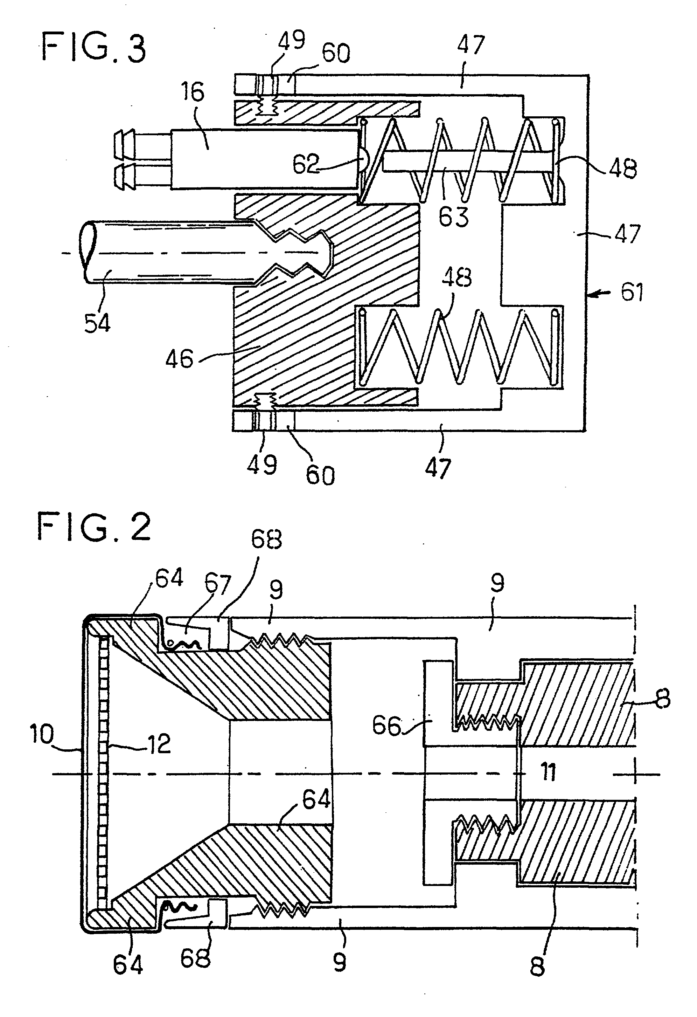

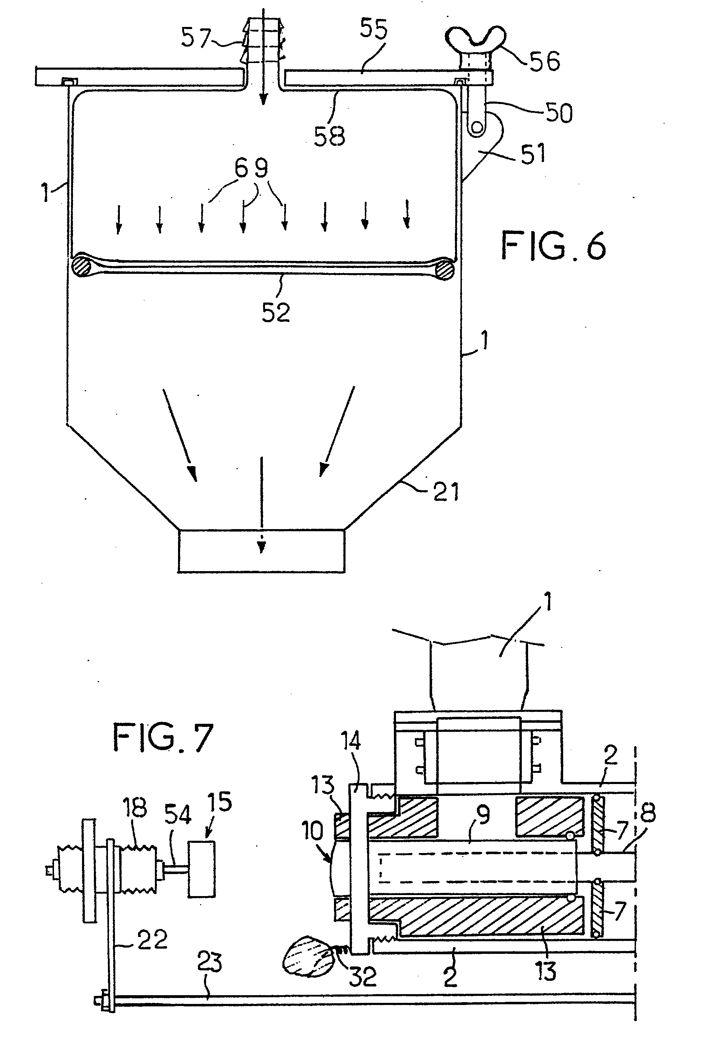

L'éjection du pâton est caractérisée en ce que, quand l'arbre 8 arrive en fin de course (figure 7), l'ergot 30 cogne par le truchement de la tige de butée 28 une vanne de pilotage qui déclenche une arrivée d'air brutale par l'extrémité 31 (figure 1) de l'arbre 8, lequel air chemine sur toute la longueur du creux 11 dudit arbre 8, passe à travers la grille rigide

de 12 (figure 2) et la toile souple 10, laquelle arrivée d'aire projette vers l'avant, le détachant de la tête du piston 9, le pâton qui a cheminé dans le couloir 17 jusqu'à la sortie. Lorsque le pâton tombe hors du couloir 17 de la machine, il percute un fil d'acier souple 32 fixé sur la bague 14, lequel fil d'acier 32 commande une vanne de pilotage qui ordonne simultanément l'arrêt de l'arrivée d'air à l'extrémité 31 de l'arbre 8 et le retour en arrière de ce dernier ainsi que de l'ensemble mécanique qui y fait corps, replaçant la machine à sa position départ pour un nouveau cycle, avec l'arrivée de la pâte dans la chambre 3.

La pâte descend très doucement du réservoir 1 (figure 6), lequel réservoir 1 a une forme rétentrice de par son extrémité inférieure 21 en forme conique et compte-tenu de la texture de la pâte, aussi pour un bon écoulement cette dernière est recouverte d'un intercalaire 59 élastique sur lequel est posé un ballon 58 en caoutchouc gonflable qui est maintenu par un couvercle 55 fixé sur le réservoir 1 au moyen de quatre vis 50 articulées par leur partie inférieure sur une pièce 51 et immobilisées avec un écrou 56. Le ballon 58 possède un embout 57 qui passe au travers du couvercle 55 par un orifice prévu à cet effet, lequel ballon recevant de l'air répercute une faible pression représentée par les flèches 69 sur toute l'étendue de l'intercalaire 59 provoquant une descente rationnelle de la pâte dans la chambre 3 du corps 2.

L'intercalaire 59 est constitué d'une double membrane 52 circulaire et élastique (latex, caoutchouc ou toute autre matière adéquate), formant une enveloppe maintenue en place et déployée grâce à un anneau intérieur 53, (inox ou matière plastique), au diamètre sensiblement inférieur à celui de la paroi du réservoir 1 de manière à rentrer dans ce dernier. L'intercalaire 59 descend au fur et à mesure de l'utilisation de la pâte, sous la pression du ballon 58, jusqu'au cône 21 dudit réservoir, et la double membrane 52 épouse la forme du cône afin de pousser la pâte en totalité hors de l'entonnoir 1.

L'arbre 8 traverse, au-dela de la pièce circulaire 5 positionnée en bout du corps 2, un ressort à boudin 26 et porte en son extrémité arrière une butée d'arrêt 25 immobilisée par un boulon 37, laquelle butée 25 retient ledit ressort à boudin 26 et comporte un pas de vis sur sa paroi extérieure sur lequel pas de vis se déplace un fourreau 34 qui permet de régulariser le déplacement de l'arbre 8.

La tringlerie 23, fixée au moyen d'un écrou 40 sur le support 22 qui porte le vérin 18 placé devant le corps 2 et par l'autre extrémité sur la plaque arrière 27 qui subit le mouvement de l'arbre 8, est animée d'un mouvement de va et vient coordonnant le déplacement des pistons 9 et 15.

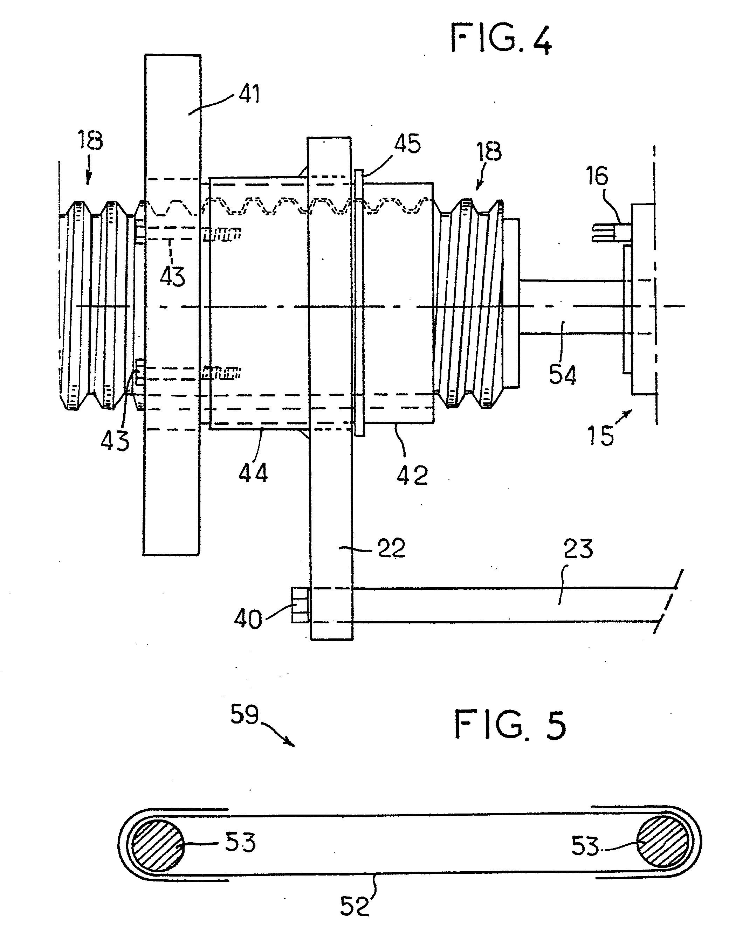

Le piston doseur 15 (figure 3) est monté sur un vérin 18 pneumatique (figure 4) simple effet, dont la position est réglable plus ou moins en avant ou en arrière par rapport à la plaque support 22, laquelle position est réglable grâce au volant 41 fixé à une bague 42 par des écrous 43, laquelle bague 42 se visse par sa face intérieure sur l'extérieur du corps du vérin 18 et ladite bague 42 glisse librement par sa face extérieure à l'intérieur du fourreau 44 auquel elle s'appuie par son épaulement 45, d'un côté et par le volant 41 de l'autre, lequel fourreau 44 est fixé à demeure sur la plaque support 22.

Le piston doseur 15 (figure 3) est constitué d'un corps 46 se vissant en son centre sur l'axe 54 du vérin 18, lequel corps 46 porte une vanne pneumatique 16 et est coiffé d'une calotte 47 repoussée vers l'avant par quatre ressorts 48 et retenue par l'arrière par quatre vis de butée 49 logées dans quatre trous oblongs 60, laquelle calotte 47 subissant la pression de la pâte par sa face 61 appuie sur les ressorts 48 et enfonce la tête 62 de la vanne pneumatique 16 de pilotage par l'entremise d'une tige 63 déclenchant ainsi la fin du dosage.

Le piston éjecteur 9 (figure 2) comporte un embout avant 64 se vissant par sa périphérie à la face intérieure du piston 9, ce dernier est accroché à l'arbre 8 par une vis 66 qui est percée d'un trou central prolongeant le creux 11 dudit arbre 8, lequel embout avant 64 porte sur le devant une grille rigide 12 ajourée qui est recouverte d'une toile souple 10, laquelle toile recouvre également l'extrémité extérieure de l'embout avant 64 et se rabat dans un évidement 67 périphérique en se resserrant par une lanière. L'évidement 67 circulaire est constitué par un retrait de la paroi extérieure de l'embout avant 64, dans lequel évidement 67 est coincée la toile souple 10 au moyen d'une bague 68 circulaire et creuse, laquelle bague 68 prise en sandwich est bloquée par le serrage de la paroi extérieure du piston 9.

Le circuit pneumatique d'air comprimé se caractérise par le fait que les mouvements des différents mécanismes s'animent selon la logique suivante:
- position départ de la machine, phase d'admission de la matière en provenance du réservoir 1 par le trou 4 vers la chambre 3 qui se caractérise par une admission d'air dans le ballon 58 gonflable et par une admission d'air dans le vérin pneumatique 18 plaçant le piston doseur 15 en position avancée limitant ainsi la chambre 3 sur l'avant.
- fin de remplissage de la chambre 3 déterminée par le déchlenchement de la vanne 18 du piston 15, laquelle vanne 18 commande l'arrivée d'air par le trou 19. Simultanément arrêt de l'arrivée d'air dans le ballon 58 qui conserve l'air reçu et arrêt de l'arrivée d'air dans le vérin 18 dont l'axe revient en position zéro.

L'arrivée du pâton à la sortie du couloir 17 déclenche une pression d'air qui sort par la toile 10 du piston 9, décollant ledit pâton, lequel tombe sur le fil d'acier 32 d'une vanne de pilotage qui ordonne simultanément la mise à l'échappement de l'air arrivé en 19 et donc retour en arrière du piston 9 sous l'effet du ressort 26 qui se détend.

## Revendications

1. Machine pour doser automatiquement des pâtons de pâte à pain comportant un réservoir (1) circulaire posé sur un corps (2) cylindrique et creux placé sur une table support, lequel réservoir (1) communique avec le corps (2) par une large ouverture (4), laquelle communique avec une première chambre (3) du corps, lequel corps (2) horizontal a son extrémité arrière fermée par une pièce circulaire (5) possédant un épaulement et comportant un trou central (6) pour le passage d'un arbre (8) qui porte à l'intérieur du corps (2) un piston (7) déplaçable par l'arrivée d'air comprimé dans une deuxième chambre (20) limitée par le piston et plus avant un piston éjecteur (9), appuyé sur ce premier piston (7) lequel arbre (8) traverse à l'extérieur du corps (2) un ressort à boudin (26) et a son extrémité arrière qui porte une butée d'arrêt (25) de ressort sur laquelle est disposé un fourreau réglable (34) qui limite l'avancement du piston éjecteur (9), caractérisé en ce que la première chambre (3) du corps (2) est limitée à l'arrière par le piston éjecteur (9) et à l'avant par un piston doseur (15), lequel recule dans une chemise (13) sous la poussée de la pâte qui s'accumule dans ladite chambre (3), et le recul du piston doseur (15) déclenche par le truchement d'une vanne (16) de pilotage l'arrivée d'air comprimé par un orifice (19) placé sur l'arrière du corps (2) dans la deuxième chambre (20), qui provoque le déplacement vers l'avant du piston (7) de l'arbre (8) et du piston éjecteur (9), lequel piston éjecteur (9) détache un pâton puis le pousse dans le couloir (17), défini par la chemise (13), ce dernier étant dégagé par le piston doseur (15) qui est entraîné par le recul du corps d'un vérin (18) qui suit le mouvement de son support (22) lequel est animé par une tringlerie (23) qui le relie à l'ensemble des pièces mobiles fixées à l'arrière de l'arbre (8) positionne sur l'arrière du corps (2) et par le recul de la tige de piston (54) du même vérin (18), les deux mouvements additionnant leur vitesse.

2. Machine pour doser selon la revendication 1, caractérisée en ce que l'arbre (8), traversant la pièce circulaire (5), est creux sur toute sa longueur, dans lequel est injecté de l'air comprimé par son extrémité arrière (31), lequel air chemine le long de l'arbre (8) et ressort par le piston éjecteur (9).

3. Machine pour doser selon les revendications 1 et 2, caractérisée en ce que le piston éjecteur (9) comporte un embout avant (64) se vissant sur la paroi intérieure du piston (9) proprement dit qui est accroché à l'arbre (8) par une vis (66) trouée en son centre.

4. Machine pour doser selon les revendications 1 et 3, caractérisée en ce que l'embout avant (64), du piston éjecteur (9), porte une grille (12) recouverte d'une toile souple (10) fixée au moyen d'une bague (68) bloquée par le vissement de la paroi extérieure du piston sur l'embout avant (64).

5. Machine pour doser selon la revendication 1, caractérisée en ce que le piston doseur (15) porté par un axe (54), est constitué d'un corps (46) renfermant une vanne pneumatique (16) et est coiffé d'un calotte (47) repoussée par quatre ressorts (48) qui se compressent sous la poussée de la pâte pour permettre le déclenchement de la vanne (16) au moyen d'un tige (63) fixée sur la paroi intérieure de la calotte.

6. Machine pour doser selon les revendications 1 et 5, caractérisée en ce que l'axe (54) est actionné par un vérin (18) simple effet dont la position est réglable plus ou moins en avant ou en arrière par rapport à son support (22).

7. Machine pour doser selon la revendication 6, caractérisée en ce que le réglage s'effectue par l'entremise d'un volant (41) fixé sur une bague (42) par des écrous (43), laquelle bague (42) se visse par la face intérieure sur l'extérieur du vérin (18) et glisse librement par sa face extérieure à l'intérieur d'un fourreau (44) porté par le support (22).

8. Machine pour doser selon la revendication 1, caractérisée en ce que la descente de la pâte contenue dans le réservoir (1) est provoquée par l'entremise d'un intercalaire (59) recouvrant ladite pâte, sur lequel est placé un ballon (58) gonflable par le truchement de son embout (57) passé au travers du couvercle (55) du réservoir (1).

9. Machine pour doser selon la revendication 8, caractérisée en ce que l'intercalaire (59) est constitué d'une double membrane (52) formant une enveloppe contenant un anneau (53) qui les maintient développées sur toute la circonférence du réservoir (1).

10. Machine à doser selon la revendication 1, caractérisée en ce qu'une plaque (27), fixée sur la butée d'arrêt (25) du ressort (26) et solidaire de l'arbre (8), porte une tringlerie (23) animée d'un mouvement d'aller et retour qui supporte à l'extrémité avant un vérin (18) par l'entremise d'un support (22).

**Claims**

1. A machine for automatically dosing lumps of dough, comprising a circular reservoir (1) installed on a hollow cylindrical body (2) placed on a support platform, which reservoir (1) is in communication with the body (2) via a wide opening (4) which is in communication with a first chamber (3) of the body, which horizontal body (2) has its rear end closed off by a circular element (5) having a shoulder and comprising a central hole (6) for the passage of a shaft (8) which within the body (2) carries a piston (7) displaceable by the inflow of compressed air into a second chamber (20) delimited by the piston and further forward an ejector piston (9) bearing on the first piston (7), which shaft (8) passes through a coil spring (26) on the outside of the body (2) and has its rear end carrying a spring abutment stop (25) on which is installed an adjustable sheath (34) which limits the advance of the ejector piston (9), characterized in that the first chamber (3) of the body (2) is delimited at the rear by the ejector piston (9) and at the front by a dosing piston (15) which moves back into a sleeve (13) under the thrust of the dough which collects in the said chamber (3) and the rearward movement of the dosing piston (15), through the intermediary action of a pilot valve (16), releases the inflow of compressed air via an orifice (19) situated at the rear of the body (2) in the second chamber (20), which causes the forward displacement of the piston (7) of the shaft (8) and of the ejector piston (9), which ejector piston (9) detaches a lump of dough and then thrusts it into the passage (17) defined by the sleeve (13), this latter being cleared by the dosing piston (15) which is drawn along by the return of the body of a ram (18) which follows the displacement of its support (22) which is moved by means of a rod linkage (23) which connects it to the set of movable elements connected to the rear of the shaft (8) positioned at the rear of the body (2) and by the rearward displacement of the connecting rod (54) of the same ram (18), the speeds of the two displacements being added together.

2. A dosing machine according to claim 1, characterized in that the shaft (8) passing through the circular element (5) is hollow throughout its length into which compressed air is injected via its rear extremity (31), which air travels the length of the shaft (8) and emerges through the ejector piston (9).

3. A dosing machine according to claims 1 and 2, characterized in that the ejector piston (9) comprises a front head (64) screwed to the inner surface of the actual piston (9) which is coupled to the shaft (8) via a screw (66) bored through its centre.

4. A dosing machine according to claims 1 and 3, characterized in that the front head (64) of the ejector piston (9) carries a grid (12) covered by a flexible cloth (10) secured by means of a ring (68) immobilised by screwing the outer wall of the piston on to the front head (64).

5. A dosing machine according to claim 1, characterized in that the dosing-piston (15) carried by a spindle (54) is formed by a body (46) enclosing a pneumatic valve (16) and is covered by a cap (47) thrust back by four springs (48) which are compressed under the thrust of the dough to allow the release of the valve (16) by means of a rod (63) secured to the inner wall of the cap.

6. A dosing machine according to claims 1 and 5, characterized in that the spindle (54) is actuated by a single-action ram (18), of which the position is adjustable more or less forwards or backwards with respect to its support (22).

7. A dosing machine according to claim 6, characterized in that the adjustment is effected by means of a wheel (41) secured on a ring (42) by bolts (43), which ring (42) has its inner surface screwed on the outside of the ram (18) and slides freely with its outer surface within a sheath (44) borne by the carrier (22).

8. A dosing machine according to claim 1, characterized in that the descent of the dough contained in the container (1) is caused by the interposition of a spacer (59) covering the said dough, on which is placed a balloon (58) inflatable via its teat (57) passed through the cover (55) of the reservoir (1).

9. A dosing machine according to claim 8, characterized in that the spacer (59) comprises a double diaphragm (52) forming an envelope containing a ring (53) which holds it stretched around the whole circumference of the reservoir (1).

10. A dosing machine according to claim 1, characterized in that a plate (27) secured to the abutment stop (25) of the spring (26) and integral with the shaft (8) carries a rod linkage (23) moved in a reciprocating displacement, which at the front end carries a ram (18) via a support (22).

**Patentansprüche**

1. Vorrichtung zum automatischen Dosieren einer aus Brotteig bestehenden Teigwurst, mit einem kreisförmigen Behälter (1), der auf einem hohlen Zylinderkörper (2) angeordnet ist, welcher auf einer Stützplatte abgestützt ist, wobei der Behälter (1) mit dem Zylinderkörper (2) über eine große Öffnung (4) kommuniziert, die mit einer ersten Kammer (3) des Zylinderkörpers (2) in Verbindung steht, und wobei das rückwärtige Ende des horizontal verlaufenden Zylinderkörpers (2) durch eine kreisförmige Stirnwand (5) geschlossen ist, die eine Schulter und eine zentrische Bohrung (6) zum Durchtritt einer Stange (8) aufweist, welche im Inneren des Zylinderkörpers (2) einen Kolben (7) trägt, welcher durch einer durch den Kolben (7) begrenzten zweiten Kammer (20) zugeführter Druckluft zu verschieben ist, und welche weiter vorn einen am Kolben (7) gehaltenen Ausstoßkolben (9) trägt, wobei die Stange (8) außerhalb des Zylinderkörpers (2) eine Schraubenfeder (26) durchsetzt und an ihrem rückwärtigen Endabschnitt ein Widerlager (25) trägt, auf dem eine einstellbare Buchse (34) angeordnet ist, mit welcher die Bewegung des Ausstoßkolbens (9) zu begrenzen ist, dadurch gekennzeichnet, daß die erste Kammer (3) des Zylinderkörpers (2) an ihrem rückwärtigen Ende durch den Ausstoßkolben (9) begrenzt ist und vorn durch einen Dosierkolben (15), der unter dem Druck des sich in der ersten Kammer (3) ansammelnden Teiges in einen Mantel (13) ausweicht, daß die Ausweichbewegung des Dosierkolbens (15) durch ein Steuerventil (16) zu steuern ist, wobei durch eine am rückwärtigen Teil des Zylinderkörpers (2) vorgesehene Öffnung (19) in die zweite Kammer (20) eintretende, auf die Vorderseite des Kolbens (7) einwirkende Druckluft ein Verschieben der Stange (8) und des Ausstoßkolbens (9) bewirkt daß der Ausstoßkolben einen Teigabschnitt abtrennt, wenn er in die von dem Mantel (13) begrenzte Ausnehmung (17) stößt, wobei letztere von dem Dosierkolben (15) freigegeben wird, der aus der Aufnahme des Körpers durch einen Zylinder (18) fortbewegt wird, welcher der Bewegung seiner Abstützung (22) folgt, welche von einem Gestänge (23) beaufschlagt ist, welches diese mit einer Anordnung aus beweglichen Teilen verbindet die hinter der Stange (8) befestigt und hinter dem Zylinderkörper (2) angeordnet ist, und durch eine Auswahlbewegung der Kolbenstange des Zylinders (18), wobei die Geschwindigkeit der beiden Bewegungen addiert werden.

2. Vorrichtung nach Anspruch 1, dadurch gekennzeichnet, daß die Stange (8), welche die kreisförmige Stirnwand (5) durchsetzt, über ihre gesamte Länge hohl ist, wobei an ihrem rückwärtigen Ende (31) Druckluft in sie einzuführen ist, welche längs der Stange (8) strömt und durch den Ausstoßkolben (9) entweichen kann.

3. Vorrichtung nach Anspruch 1 und 2, dadurch gekennzeichnet, daß der Ausstoßkolben (9) einen vorderen Ansatz (64) aufweist, der auf die Innenwand des Ausstoßkolbens (9) geschraubt ist, welcher durch eine mittige Schraube (66) an der Stange (8) befestigt ist.

4. Vorrichtung nach Anspruch 1 und 3, dadurch gekennzeichnet, daß der vordere Ansatz (64) des Ausstoßkolbens (9) ein durch einen flexiblen Stoff (10) überdecktes Gitter (12) trägt, welcher mittels eines Ringes (68) befestigt ist und durch ein Außengewinde des Kolbens auf dem vorderen Ansatz (64) arretiert ist.

5. Vorrichtung nach Anspruch 1, dadurch gekennzeichnet, daß der von einer Achse (54) getragene Dosierkolben (15) einen Körper (46) aufweist, der das Steuerventil (16) einschließt und von einer Kappe (47) bedeckt ist, die durch vier Federn (48) zurückgedrückt wird, welche unter dem Druck des Teiges zusammengedrückt werden, um eine Betätigung des Steuerventils (16) mittels eines Stößels (63) zu bewirken, der an der Innenseite der Kappe (47) befestigt ist.

6. Vorrichtung nach Anspruch 1 und 5, dadurch gekennzeichnet, daß die Achse (54) durch einen einfach wirkenden Zylinder (18) zu betätigen ist, dessen Stellung mehr oder weniger nach vorn oder nach hinten durch seine Abstützung (22) steuerbar ist.

7. Vorrichtung nach Anspruch 6, dadurch gekennzeichnet, daß die Steuerung bzw. Regelung mittels eines Schwungkranzes (41) od.dgl. bewirkt wird, der mittels Schrauben (43) auf einem Ring (42) befestigt ist, und daß der Ring (42) mittels seiner Innenseite auf das Äußere des Zylinders (18) geschraubt ist und durch seine Außenseite frei zum Inneren einer Manschette (44) gleitet, welche durch die Stütze (22) abgestützt ist.

8. Vorrichtung nach Anspruch 1, dadurch gekennzeichnet, daß daß die Abwärtsbewegung des Teiges in dem Behälter (1) durch Anordnung einer Zwischenlage (59) ausgelöst wird, welche den Teig bedeckt, über welcher ein Ballon (58) angeordnet ist, der durch seinen Nippel (57) aufblasbar ist, welcher sich durch den Deckel (55) des Behälters (1) erstreckt.

9. Vorrichtung nach Anspruch 8, dadurch gekennzeichnet, daß die Zwischenlage (59) aus einer doppelten Membran (52) besteht, welche eine Hülle mit einem Ring (53) bildet, der sich um den Umfang des Behälters (1) erstreckt.

10. Vorrichtung nach Anspruch 1, dadurch gekennzeichnet, daß eine auf dem Anschlag des Widerlagers (25) für die Schraubenfeder (26) befestigte, einteilig mit der Stange (8) ausgebildete Platte (27) ein Gestänge (23) trägt, die durch eine Hin- und Herbewegung angeregt wird und am äußeren Ende vor einem Zylinder durch Zwischenanordnung einer Abstützung (22) abgestützt ist.

FIG. 1

EP 0 273 065 B1

FIG.3

FIG.2

# FIG. 4

18
41
45
18
16
43
43
43
44
42
54
15

22
23
40

# FIG. 5

59
53
53
52

FIG. 6

FIG. 7